# EUROPÄISCHE PATENTANMELDUNG

(11) **EP 0 901 029 A1**
(43) Veröffentlichungstag der Anmeldung: **10.03.1999**
(21) Anmeldenummer: 98116605.1
(22) Anmeldetag: 02.09.1998
(51) Int. Cl.: G02B 7/02

(54) **Optisches Bauelement**

(30) Priorität: 06.09.1997 DE 19739024
(71) Anmelder: Hella KG Hueck & Co., 59552 Lippstadt (DE)
(72) Erfinder: Giepen, Bernd, 59597 Erwitte (DE)

(57) **Zusammenfassung**

Optisches Bauelement mit Halterung zur Fixierung mindestens eines optischen Elementes (3) in einem die Halterung umgebenden Gehäuse, wobei die Halterung mindestens zwei seitlich an dem optischen Element angeformte Rastarme (9) aufweist, über die die Halterung mit dem Gehäuse selbstrastend verbindbar ist.

## Beschreibung

Die Erfindung betrifft ein optisches Bauelement mit Halterung zur Fixierung mindestens eines optischen Elementes in einem die Halterung umgebenden Gehäuse.

Optische Bauelemente, wie beispielsweise Linsen, werden insbesondere, wenn ihr Durchmesser kleiner ist, als das sie umgebende Gehäuse mittels einer Fassung bzw. Halterung in das sie umgebende Gehäuse eingesetzt. Dazu müssen zunächst Linse und Halterung montiert und anschließend muß die Halterung im Gehäuse fixiert werden. Dies ist relativ zeitaufwendig und somit auch teuer. Insbesondere bei Einsatz in Kraftfahrzeugen werden die optischen Bauelemente Vibrationen ausgesetzt, die eine sichere Fixierung notwendig machen.

Aufgabe der vorliegenden Erfindung ist es daher, eine einfache, kostengünstige und sichere Fixierung des optischen Bauelementes in dem ihn umgebenden Gehäuse zu schaffen.

Die Aufgabe wird erfindungsgemäß dadurch gelöst, daß die Halterung mindestens zwei seitlich an dem optischen Element angeformte Rastarme aufweist, über die die Halterung mit dem Gehäuse selbstrastend verbindbar ist.

Durch die Anformung der Halterung bzw. ihrer Rastarme an das optische Element fällt die sonst übliche Montage des optischen Elementes in der Halterung weg. Durch die selbstrastende Bindung von Halterung und des sie umgebenden Gehäuses muß die Halterung zur Montage lediglich so in das Gehäuse eingesetzt werden, daß die Halterung einrastet. Dadurch ist eine schnelle und kostengünstige Montage bzw. Fixierung des optischen Bauelementes in dem Gehäuse möglich.

Gemäß einer bevorzugten Ausführungsform der Erfindung weist die Halterung eine parallel zur optischen Achse verlaufende Wandung auf, die an ihrem dem optischen Element benachbarten ersten Ende in das optische Element übergeht und zumindest teilweise von dem Gehäuse führbar ist. An dem dem ersten Ende der Wandung abgewandten zweiten Ende ist ein zweites optisches Element in eine Aufnahme einsetzbar. Die Halterung weist dabei zwei das zweite optische Element an der Halterung rastend fixierende Rastteile auf.

Dadurch ist es möglich, ein zweites optisches Element ebenfalls schnell und kostengünstig in einem vorbestimmten Abstand zum ersten optischen Element zu bringen und ohne zusätzlichen Aufwand zusammen mit der Halterung in dem Gehäuse zu fixieren.

Gemäß einer weiteren bevorzugten Ausführungsform der Erfindung werden die beiden, das optische Element fixierenden Rastteile so in dem sie umgebenden Gehäuse geführt, daß eine Entrastung des zweiten optischen Elementes bei in das Gehäuse eingesetzter Halterung verhindert wird.

Nach einer weiteren bevorzugten Ausführungsform der Erfindung ist das Gehäuse als ein einen Reflektor mit Lampe mit einem Ende eines Lichtleiters verbindendes Koppelelement ausgebildet. Das optische Element ist dabei als kartesische Linse und das zweite optische Element als Infrarotfilter ausgebildet. Die am optischen Element angeformten Rastarme wirken dabei als wärmeabführende Kühlrippen.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:

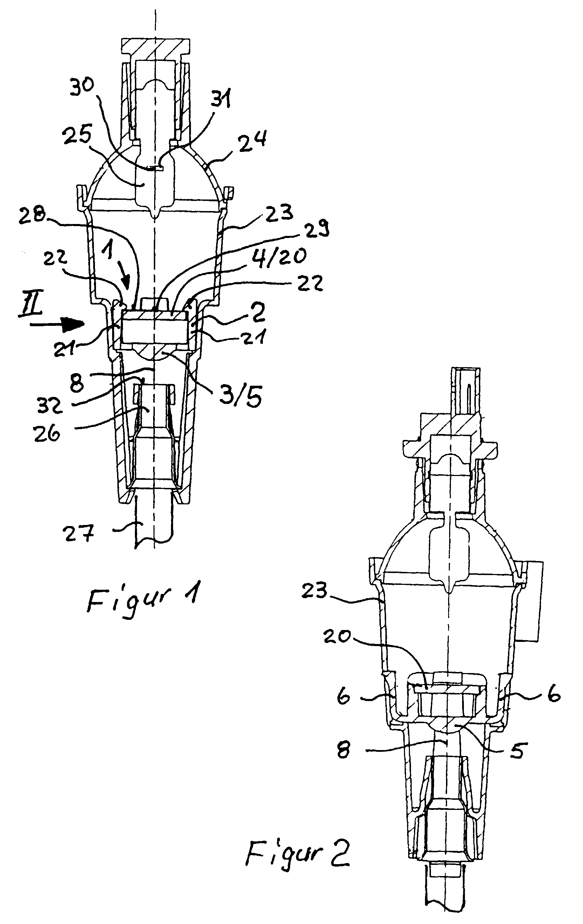

- Figur 1:: Ein als Koppelelement ausgebildetes Gehäuse, das einen Reflektor mit Lampe mit einem Ende eines Lichtleiters verbindet, mit einem eingesetzten optischen Bauelement im Schnitt,
- Figur 2:: das Gehäuse von Figur 1 aus Richtung II im Schnitt,

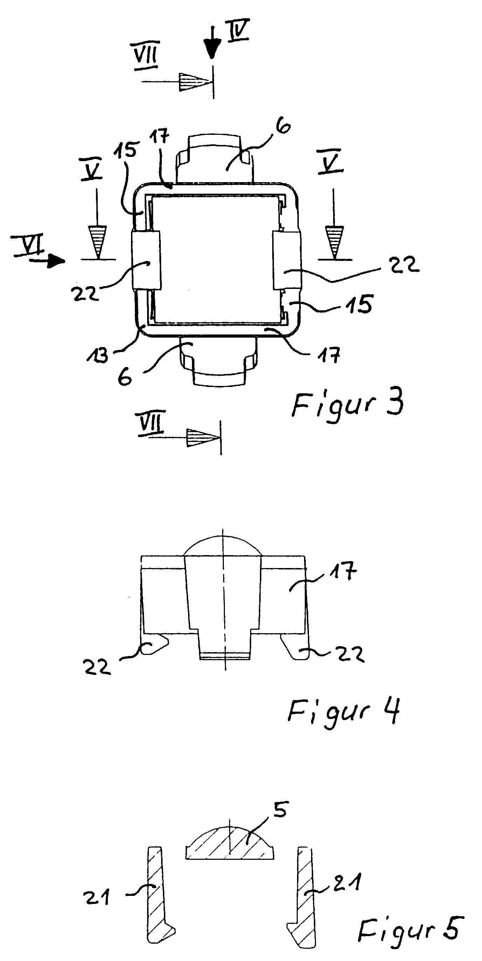

- Figur 3:: eine Draufsicht auf das optische Bauelement von Figur 1 ohne Infrarotfilter,
- Figur 4:: eine Ansicht aus Richtung IV des optischen Bauelementes von Figur 3,
- Figur 5:: das optische Bauelement von Figur 3 entlang der Linie V - V geschnitten,

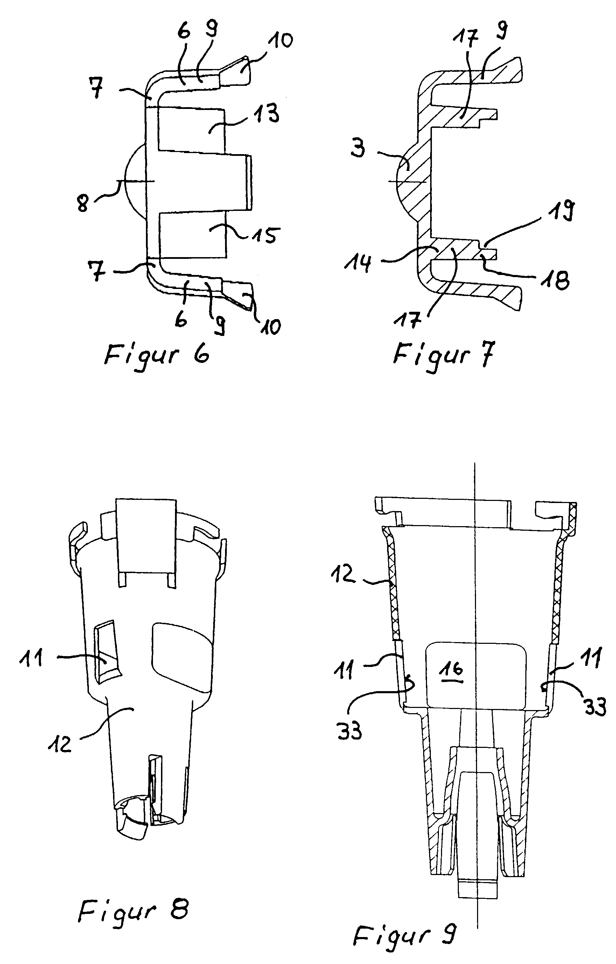

- Figur 6:: eine Ansicht aus Richtung VI des optischen Bauelementes von Figur 3,
- Figur 7:: das optische Bauelement von Figur 3, entlang der Linie VII - VII geschnitten,
- Figur 8:: das Koppelelement von Figur 1 in einer räumlichen Darstellung und
- Figur 9:: das Koppelelement von Figur 2 im Schnitt.

Ein optisches Bauelement (1) besteht im wesentlichen aus einer Halterung (2), einem optischen Element (3) und einem zweiten optischen Element (4).

Die Halterung (2) ist an das optische Element (3), das als kartesische Linse (5) ausgebildet ist, angeformt. Die Halterung (2) weist zwei einander gegenüberliegende Rastarme (6) auf, die mit einem ersten Ende (7) seitlich, d.h., quer zur optischen Achse (8) angeformt sind. Die freien Enden (9) der Rastarme (6) sind etwa parallel zur optischen Achse (8) angeordnet. Die freien Enden (9) weisen an ihrem dem ersten Ende (7) abgewandten Ende einen radial nach außen gerichteten Rastkopf (10) auf, der in eine Aussparung (11) des das optische Bauelement (1) umgebenden Gehäuses (12) rastend eingreift. Die Halterung (2) weist weiterhin eine parallel zur optischen Achse verlaufende Wandung (13) auf, die an ihrem dem optischen Element (3) benachbarten ersten Ende (14) in das optische Element (3) übergeht und an ihren quer zu den Rastarmen (6) angeordneten Seiten Führungswandungen (15) aufweist, die von den den Führungswandungen (15) benachbarten Führungswandungen (16) des Gehäuses (12) geführt werden. Etwa parallel zu den freien Enden (9) der Rastarme (6) sind zwei einander gegenüberliegende Seitenwandungen (17) der Wandung (13) angeordnet, so daß die Führungswandungen (15) und die Seitenwandungen (17) quer zur optischen Achse (8) einen im wesentlichen rechteckigen Querschnitt der Wandung (13) ergeben.

Die Wandung (13) weist eine an ihrem dem ersten Ende (14) abgewandten zweiten Ende (18) angeordnete Aufnahme (19) auf, in die das zweite optische Element, das als Infrarotfilter (20) ausgebildet ist, einsetzbar ist. Im Bereich der Seitenwandungen (17) der Wandung (13) sind zwei Rastteile (21) angeordnet. Die Rastteile (21) verlaufen somit ebenfalls im wesentlichen parallel zur optischen Achse (8). Die Rastteile (21) überragen die Wandung (13) mit ihren dem optischen Element (3) abgewandten Rastenden (22), die den in Aufnahme (19) eingesetzten Infrarotfilter (20) fixierend hintergreifen.

Die Rastarme (6), wie auch die Rastteile (21) sind federnd ausgebildet. Das optische Element (3) mit angeformter Halterung (2) ist aus einem Polycarbonat, wie beispielsweise Makrolon glasklar, ausgebildet.

Das die Halterung (2) umgebende Gehäuse (12) ist als ein Koppelelement (23) ausgebildet, das einen Reflektor (24) mit Lampe (25) mit einem Ende (26) eines Lichtleiters (27) verbindet. Das optische Bauelement (1) ist selbstrastend in dem Koppelelement (23) zwischen Reflektor (24) und Ende (26) des Lichtleiters (27) fixierbar.

Der Infrarotfilter (20) ist dabei mit seiner dem Reflektor (24) zugewandten Außenfläche (28) im zweiten Brennpunkt (29) des Reflektors (24) angeordnet, in dessen ersten Brennpunkt (30) sich der Glühfaden (31) der Lampe (25) befindet. Die kartesische Linse (5) ist hinter dem zweiten Brennpunkt (29) angeordnet, wodurch die Temperaturbelastung abgesenkt wird. Die kartesische Linse (5) fokussiert das Licht des Reflektors (24) auf die Einkoppelfläche (32) des Lichtleiters (27). Dabei wird der Winkel, von dem das Licht in den Lichtleiter (27) eingekoppelt wird, verkleinert. Durch das optische Bauelement (1) wird somit eine gleichmäßige Intensitätsverteilung über die Einkoppelfläche (32) erreicht.

Zur Montage des optischen Bauelementes (1) wird zunächst der Infrarotfilter (20) in die Aufnahme (19) der Wandung (13) eingesetzt. Beim Einsetzen des Infrarotfilters (20) in die Aufnahme (19) federn die Rastteile (21) mit ihren Rastenden (22) seitwärts nach außen weg und greifen nach Einsatz des Infrarotfilters (20) mit ihren Rastenden (22) über den Infrarotfilter (20), so daß dieser fixiert wird. Anschließend wird das optische Bauelement (1) so in das Gehäuse (12) bzw. das Koppelelement (23) eingesetzt, daß die Rastarme (6), die zunächst nach innen gedrückt werden, nach Erreichen der Rastposition zurückfedern und mit ihren Rastköpfen (10) in die Aussparungen (11) des Gehäuses (12) eingreifen. Dabei werden die Führungswandungen (15) bzw. die Rastteile (21) der Halterung (2) von den benachbarten Führungswandungen (16) des Gehäuses (12) geführt. Die Führungswandungen (16) des Gehäuses (12) verhindern zugleich, daß bei dem eingesetzten optischen Bauelement (1) die Rastteile (21) zurückfedern können. Der Infrarotfilter (20) kann sich somit nicht von selbst aus der Halterung (2) lösen. Durch den rechteckigen Querschnitt der Wandung (13) bzw. durch die Führungswandungen (16) des Gehäuses (12) und durch die teilweise an den Rastarmen (6) benachbarten Seitenwandungen (33) des Gehäuses (12) anliegenden Rastarmen (6) wird eine sichere Fixierung des optischen Bauelementes (1) in dem Gehäuse (12) erzielt, die zugleich ein Verdrehen im Gehäuse (12) sicher verhindert.

## Patentansprüche

1. Optisches Bauelement mit Halterung zur Fixierung mindestens eines optischen Elementes in einem die Halterung umgebenden Gehäuse, dadurch gekennzeichnet, daß die Halterung (2) mindestens zwei seitlich an dem optischen Element (3) angeformte Rastarme (6) aufweist, über die die Halterung mit dem Gehäuse (12) selbstrastend verbindbar ist.

2. Optisches Bauelement nach Anspruch 1, dadurch gekennzeichnet, daß die Halterung (2) eine parallel zur optischen Achse (8) verlaufende Wandung (13) aufweist, die an ihrem dem optischen Element (3) benachbarten ersten Ende (7) in das optische Element (3) übergeht und zumindest teilweise von dem Gehäuse (12) führbar ist.

3. Optisches Bauelement nach Anspruch 1 oder 2, dadurch gekennzeichnet, daß in der Halterung (2) in einem Abstand zum optischen Element (3) ein zweites optisches Element (4) anordbar ist.

4. Optisches Bauelement nach Anspruch 2 oder 3, dadurch gekennzeichnet, daß das zweite optische Element (4) in eine an dem dem ersten Ende (14) der Wandung (13) abgewandten zweiten Ende (18) angeordnete Aufnahme (19) einsetzbar ist.

5. Optisches Bauelement nach Anspruch 3 oder 4, dadurch gekennzeichnet, daß die Halterung (2) mindestens zwei das zweite optische Element (4) an der Halterung (2) rastend fixierende Rastteile (21) aufweist.

6. Optisches Bauelement nach Anspruch (5), dadurch gekennzeichnet, daß die Rastteile (21) so von dem Gehäuse (12) führbar sind, daß eine Entrastung des zweiten optischen Elementes (4) bei in das Gehäuse (12) eingesetzter Halterung (2) verhindert wird.

7. Optisches Bauelement nach einem der Ansprüche 1 bis 6, dadurch gekennzeichnet, daß das optische Element (3) als kartesische Linse (5) ausgebildet ist.

8. Optisches Bauelement nach einem der Ansprüche 3 bis 7, dadurch gekennzeichnet, daß das zweite optische Element (4) als Infrarot-Filter (20) ausgebildet ist.

9. Optisches Bauelement nach einem der Ansprüche 2 bis 8, dadurch gekennzeichnet, daß die Wandung (13) quer zur optischen Achse (8) einen im wesentlichen rechteckigen Querschnitt aufweist.

10. Optisches Bauelement nach einem der Ansprüche 1 bis 9, dadurch gekennzeichnet, daß Gehäuse (12) als ein einen Reflektor (24) mit Lampe (25) mit einem Ende (26) eines Lichtleiters (27) verbindendes Koppelelement (23) ausgebildet ist.
